# EUROPÄISCHE PATENTSCHRIFT

(11) **EP 1 669 660 B1**
(45) Veröffentlichungstag und Bekanntmachung des Hinweises auf die Patenterteilung: **23.05.2007**
(21) Anmeldenummer: 04029403.5
(22) Anmeldetag: 11.12.2004
(51) Int. Cl.: F16L 55/115, F16L 35/00, F16K 31/524, F16L 55/07

(54) **Einrichtung zur Aufnahme eines Hydrauliksteckers**
Device for receiving a hydraulic plug
Dispositif pour recevoir une fiche mâle hydraulique

(43) Veröffentlichungstag der Anmeldung: 14.06.2006
(73) Patentinhaber: Schnippering, Hans-Peter, 96250 Ebensfeld-Birkach (DE); Zipfel, Peter, 96231 Bad Staffelstein-Grundfeld (DE)
(72) Erfinder: Schnippering, Hans-Peter, 96250 Ebensfeld-Birkach (DE); Zipfel, Peter, 96231 Bad Staffelstein-Grundfeld (DE)
(74) Vertreter: WALTHER, WALTHER & HINZ Patentanwälte - European Patent Attorneys

(56) Entgegenhaltungen:
- EP-A- 0 346 785
- WO-A-97/30616
- US-A- 3 574 314
- US-A1- 2004 061 089

## Beschreibung

Die vorliegende Erfindung betrifft eine Einrichtung zur Aufnahme des Hydrauliksteckers einer Hydraulikkupplung.

Ein Hydraulikstecker als Bestandteil einer Hydraulikkupplung ist aus dem Stand der Technik hinreichend bekannt. Diese Hydraulikstecker befinden sich üblicherweise an Hydraulikleitungen, wobei die Hydraulikleitungen Bestandteil eines Hydraulikaggregates sind, beispielsweise bei einem Bagger, einem Ackerschlepper, einem Kipper oder sonstigen Gerätschaften. Das Lösen des Steckerteils vom Kupplungsteil ist relativ leicht dadurch möglich, dass das Kupplungsteil eine verschiebliche Hülse aufweist, wobei bei Verschieben der Hülse der Stecker freigegeben wird.

Der Stecker befindet sich - wie bereits ausgeführt - am Ende einer Hydraulikleitung. Diese Hydraulikleitung steht nach Lösen der Steckverbindung unter Druck. Um zu verhindern, dass die in der Leitung befindliche Hydraulikflüssigkeit aus dem Stecker ausläuft, besitzt der Stecker endseitig einen sogenannten Verschlussteller. Dieser Verschlussteller ist nach einer Ausführungsform an seinem freien, der Kupplung zugewandten Ende, mit einem Konus versehen; nach einer anderen Ausführungsform zeigt der Teller lediglich eine ebene Fläche. Der Teller steht unter der Last einer Feder, die zusätzlich zum Öldruck dafür sorgt, dass der Teller die Öffnung des Steckers sicher verschließt.

Problematisch ist nun, wenn der Hydraulikstecker erneut mit der Kupplung verbunden werden soll. Dies deshalb, weil der Verschlussteller zum einen gegen den Druck des Öls in der Hydraulikleitung verschoben werden muss, und zum anderen gegen die auf den Teller wirkende Kraft der Feder.

Insbesondere auf dem Lande ist nun üblich, den Stecker kurz auf eine feste Unterlage, z. B. einen festen Metallgegenstand (Hammer usw.), zu schlagen mit der Folge, dass der Verschlussteller für einen kurzen Moment die Öffnung freigibt und Öl austritt, und so der Druck in der Hydraulikleitung abgebaut wird. Ist der Druck in der Hydraulikleitung abgebaut, lässt sich, da der Verschlussteller nunmehr lediglich gegen die Kraft der auf ihn wirkenden Feder verschoben werden muss, der Stecker relativ einfach mit der Kupplung verbinden. Nachteilig hierbei ist, dass der Stecker bei mehrmaligem Aufschlagen auf einen festen Gegenstand "verschlagen" wird, was nichts anderes bedeutet, als dass der Stecker soweit beschädigt ist, dass der Durchfluss gehemmt oder verringert ist.

Aus der US 2004/061089 A1 ist eine Vorrichtung bekannt, um den Druck in einem Hydraulikschlauch abzubauen. Hierfür ist ein Kuppelglied vorgesehen, das in den Schnellkupplungsansatz eines Hydrauliksteckers einer Hydraulikleitung einführbar ist. Das Kuppelglied nimmt eine Einrichtung auf, die einen verdrehbaren Stift besitzt.. Bei Verdrehen des Stiftes in Richtung auf den Verschlussteller des Hydrauliksteckers wird die Öffnung des Schlauches im Bereich des Steckers freigegeben mit der Folge, dass Öl abläuft und der Druck in der Leitung abnimmt. Nachteilig hierbei ist, dass mit dieser Vorrichtung relativ viel Öl abläuft mit der Folge, dass bei erneuter Kupplung der Schlauch erst entlüftet werden muss.

Aus der US 3,574,314 ist eine Kupplung eines Nachfülltanks zum Nachfüllen des Reservoirs eines Feuerzeugs bekannt. Hierbei wird die Kupplung des Nachfülltanks auf das Reservoir des Feuerzeugs geschraubt, wobei durch das Zusammenwirken entsprechender Stempel in der Kupplung und dem Reservoir ein Durchgang zum Durchlass des Gases geöffnet wird und auch geöffnet bleibt, bis das Reservoir des Feuerzeugs gefüllt ist.

Aus der EP 0 346 785 A1 ist ein Verschlussglied für eine Flüssigkeitsleitung bekannt, wobei das Verschlussglied zwei Gehäuseteile umfasst, wobei durch Verdrehen der beiden Gehäuseteile relativ zueinander das Verschlussglied geöffnet oder geschlossen werden kann.

Aus dem Stand der Technik ist des Weiteren bereits eine Zange bekannt, mit welcher der Verschlussteller des Steckers in den Stecker eingedrückt wird, und hierbei der Druck in der Hydraulikleitung abgebaut wird. Unter der Zange befindet sich ein Behältnis, das der Aufnahme des austretenden Öls dient. Hierdurch kann der Ausfluss an Hydrauliköl begrenzt werden.

Ist die Steckverbindung zwischen Hydraulikkupplung und Hydraulikstecker gelöst, dann muss dafür gesorgt werden, dass nach Möglichkeit kein Schmutz in die Kupplung bzw. in den Stecker eintritt. Hierzu sind Staubschutzkappen bekannt, die dafür sorgen, dass eine solche Verschmutzung nicht stattfindet.

Es hat sich nun herausgestellt, dass insbesondere in der Landwirtschaft das Verschlagen der Stecker relativ häufig vorkommt und auch nicht selten die Staubschutzkappe vergessen wird aufzusetzen. Die Folge hiervon ist, dass die Stecker relativ zügig verschleißen mit der weiteren Folge, dass ein Austausch des Steckers vorgenommen werden muss, was mit nicht unerheblichen Kosten verbunden ist.

Der Erfindung liegt daher die Aufgabe zu Grunde, eine Einrichtung der eingangs genannten Art bereitzustellen, mit der die Handhabung des Steckers erleichtert wird, und insbesondere verhindert wird, dass der Stecker verschlagen wird, wie dies bereits zuvor erläutert worden ist.

Die Aufgabe wird erfindungsgemäß durch eine Einrichtung zur Aufnahme des Hydrauliksteckers einer Hydraulikkupplung gelöst, wobei der Hydraulikstecker einen axial verschieblichen Verschlussteller aufweist, wobei die Einrichtung ein Gehäuse umfasst, wobei das Gehäuse eine Öffnung für den Stecker besitzt, und wobei im Gehäuseinneren ein Stempel vorgesehen ist, der von einem im Gehäuse angeordneten Sitz axial verschieblich aufnehmbar ist auf die Gehäuseöffnung zu gerichtet ist, **dadurch gekennzeichnet, dass** durch eine entsprechende ruckhafte Bewegung des Steckers gegen den Stempel durch den Stempel der Verschlussteller bei in der Öffnung einsitzendem Stecker in Richtung des Steckers verschiebbar ist.

Hiermit wird die Möglichkeit eröffnet, dass entweder durch ruckhaftes Einschieben des Steckers in die Öffnung durch den Stempel der Verschlussteller so weit verschoben wird, dass ein Druckausgleich in der Leitung stattfindet mit der Folge, dass austretendes Öl in das Gehäuse einläuft, und so keine Gefahr der Verschmutzung des umgebenden Erdreichs besteht. Das ruckhafte Einführen oder Einschieben des Steckers in die Öffnung des Gehäuses mit dem Ziel der axialen Verschiebung des Verschlusstellers durch den Stempel kann auch dadurch erzielt werden, dass die gesamte Einrichtung samt Stecker auf eine feste Unterlage aufgeschlagen wird, um hierdurch die besagte ruckhafte Bewegung des Steckers gegen den Stempel zu bewerkstelligen.

Vorteilhafte Merkmale der Erfindung sind den Unteransprüchen zu entnehmen.

Im Einzelnen ist vorgesehen, dass der Stempel einen konisch geformten Stempelkopf aufweist. Wie bereits an anderer Stelle erläutert, gibt es zwei Arten von Verschlusstellern. Ein erster Verschlussteller zeichnet sich durch eine im Wesentlichen ebene Tellerfläche aus, wobei durch einen solchen, insbesondere konisch zulaufenden Stempelkopf die Möglichkeit eröffnet wird, diesen Verschlussteller axial zum Inneren des Steckers hin zu verschieben. Aber auch, wenn der Verschlussteller eine nach außen gerichtete konische Ausbildung aufweist, beispielsweise in Form einer vorstehenden Nase, so wird durch den konisch ausgebildeten Stempel die Verschiebung des Verschlusstellers in Richtung des Steckers bei Aufschlagen auf den Stempel bewirkt.

In Bezug auf den Stempel ist des Weiteren im Einzelnen vorgesehen, dass der Stempel auf einem Sitz im Gehäuse insbesondere verdrehfest aufsitzt, um den Stempel im Gehäuse zu halten und gegebenenfalls zu führen.

Des Weiteren ist vorgesehen, dass durch den Stempel die Gehäuseöffnung verschließbar ist. In Verbindung mit dem Merkmal, dass der Stempel durch den Sitz axial verschieblich ist, wird hieraus deutlich, dass dann, wenn durch die zuvor beschriebene ruckhafte Bewegung der Verschlussteller auf den Stempel zu bewegt wird, und der Stempel nunmehr so weit zurückweicht, dass die Öffnung des Gehäuses freigegeben wird, das aus der Hydraulikleitung bzw. aus dem Stecker austretende Hydrauliköl in dem Gehäuse aufgefangen wird. Um sicherzustellen, dass der Stempel im Normalzustand die Gehäuseöffnung verschließt, steht der Stempel insofern unter der Last einer Feder, was bedeutet, dass durch die Feder der Stempel gegen die Gehäuseöffnung gepresst wird, mithin die Gehäuseöffnung verschließt.

Des Weiteren ist im Einzelnen vorgesehen, dass das Gehäuse einen Gehäusetopf und einen Gehäusedeckel umfasst, die relativ zueinander verdrehbar miteinander verbunden sind, wobei bei Verdrehung vom Gehäusetopf und Gehäusedeckel durch den Stempel die im Gehäusedeckel angeordnete Öffnung freigegeben wird. Hierdurch wird somit die Möglichkeit eröffnet, das sich im Gehäuse angesammelte Öl auszugießen. In diesem Zusammenhang zeigt der Stempel einen Kranzabschnitt, wobei bei Verdrehen des Gehäusedeckels relativ zum Gehäusetopf der Stempel auf den Stempelsitz zu verschoben wird, wobei in der eingeschobenen Stellung des Stempels ein Schlitz zwischen Stempelkopf und Wandung der Gehäuseöffnung freigegeben wird, um so - wie bereits zuvor erläutert - im Gehäuse angesammeltes Öl ausgießen zu können.

In Einzelnen zeigt hierbei der Kranzabschnitt des Stempels auf seiner der Gehäuseöffnung zugewandten Oberseite mindestens eine Auflaufschräge, wobei der Gehäusedeckel auf seiner dem Kranzabschnitt zugewandten Seite mindestens eine Warze besitzt, die an dem Kranzabschnitt anliegt. Bei Verdrehung des Gehäusedeckels relativ zum Gehäusetopf gelangt die Warze über die Auflaufschräge auf die Oberseite des Kranzabschnittes, wobei die Warze hierbei den Stempel in Richtung auf den Stempelsitz drückt. Hierbei entsteht der besagte Schlitz zwischen Stempelkopf und Gehäusedeckel, durch den das im Gehäuse angesammelte Öl ausgekippt werden kann.

Des Weiteren ist vorgesehen, dass sich im Bereich des Gehäusedeckels ein Lüftungskanal befindet, um beim Einpressen des Steckers in das Gehäuse gegebenenfalls überschüssige Luft abführen zu können.

Wie bereits an anderer Stelle erläutert, ist nach dem Stand der Technik zum Verschließen des Steckers eine sogenannte Staubschutzkappe erforderlich. In diesem Zusammenhang ist nun vorgesehen, dass das Gehäuse Verbindungsmittel zum Verbinden des Gehäuses mit dem Hydraulikstecker aufweist. Das heißt, dass durch eine solche Verbindung diese Einrichtung zur Aufnahme des Hydrauliksteckers auch als Staubschutzkappe dient. In diesem Zusammenhang ist des Weiteren im Einzelnen vorgesehen, dass das Verbindungsmittel zwei Ringe umfasst, die durch mindestens einen Steg miteinander verbunden sind, wobei vorteilhaft sowohl die Ringe, als auch der Steg aus einem elastisch nachgiebigen Material ausgebildet sind. Der eine Ring wird hierbei um das Gehäuse gelegt, während der andere Ring den Stecker erfasst. Somit ist der Stecker mit dem Gehäuse über diese zuvor beschriebenen Verbindungsmittel verbunden.

Anhand der Zeichnungen wird die Erfindung nachstehend beispielhaft näher erläutert:

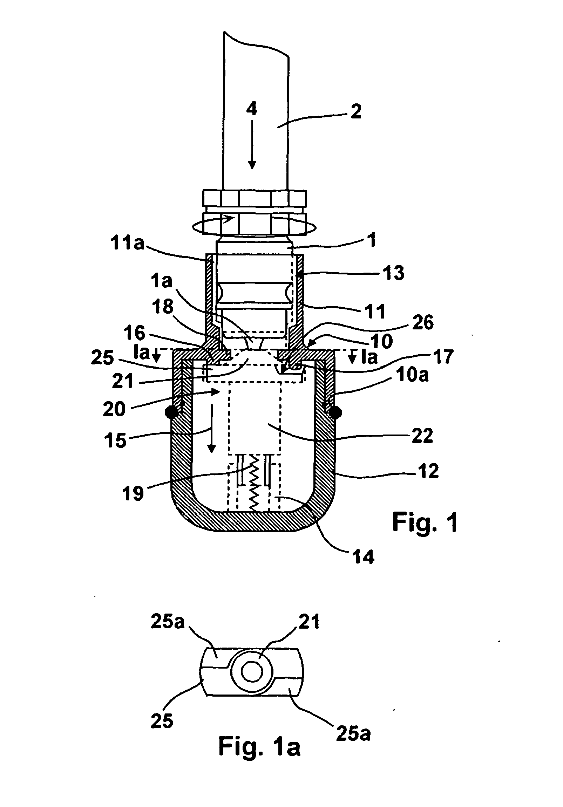

- Fig. 1: zeigt die Einrichtung mit einsitzendem Stecker, wobei durch den Stempel die Öffnung verschlossen ist;
- Fig. 2: zeigt die Einrichtung gemäß Fig. 1, wobei durch den Stecker der Stempel in Richtung auf den Gehäusetopf zu verschoben ist;
- Fig. 3a: zeigt eine Stellung der Einrichtung, bei der der Gehäusedeckel relativ zum Gehäusetopf verdreht ist, mithin durch die Warze der Stempel in Richtung auf den Stempelsitz verschoben ist, so dass sich ein Schlitz zwischen Stempel und Gehäusedeckel ergibt;
- Fig. 3b: zeigt das Ausgießen des Öls aus dem Gehäuse;
- Fig. 4: zeigt perspektivisch die gesamte Einrichtung mit Stempel, sowie das Verbindungsmittel zum Verbinden des Gehäuses mit dem Hydraulikstecker.

Der mit 1 bezeichnete Hydraulikstecker besitzt die Hydraulikleitung 2. Der Hydraulikstecker 1 sitzt in dem insgesamt mit 10 bezeichneten Gehäuse ein.

Das Gehäuse 10 zeigt einen Gehäusedeckel 11 und einen Gehäusetopf 12, die relativ zueinander verdrehbar sind. Der Gehäusedeckel 11 besitzt eine Öffnung 13 zur Aufnahme des Hydrauliksteckers 1, wobei der Gehäusetopf den insgesamt mit 20 bezeichneten Stempel aufnimmt. Der Stempel 20 ist durch einen im Gehäusetopf angeordneten Sitz 14 verdrehfest, aber axial verschieblich gehalten. Das heißt, dass der Stempel in Richtung des Pfeiles 15 entgegen der Kraft der Feder 19 verschieblich ist.

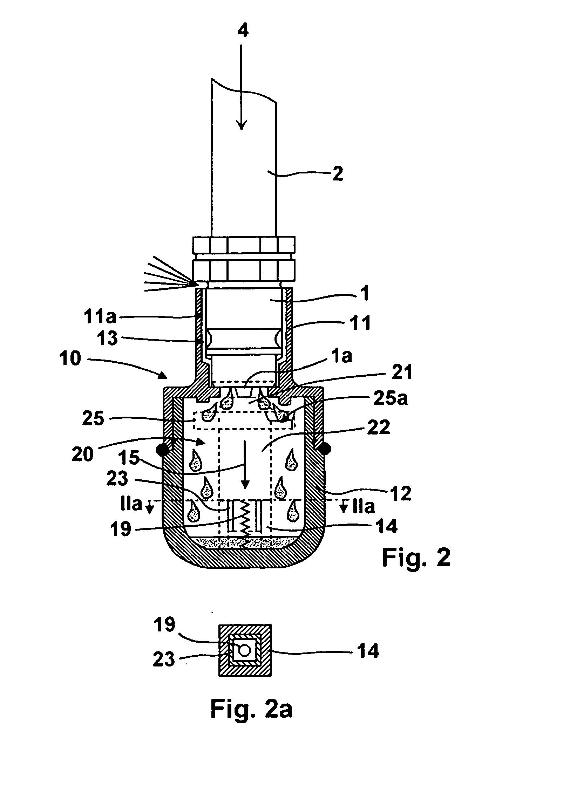

Der Stempel 20 besitzt darüber hinaus einen Stempelkopf 21, sowie einen Stempelhals 22 und einen Stempelfuß 23, wobei der Stempelfuß 23 durch den mit 14 bezeichneten Sitz axial beweglich, aber unverdrehbar aufnehmbar ist. Dies erfolgt z. B. durch die Ausbildung des Fußes 23 und entsprechend des Sitzes 14 als Vielkant, im vorliegenden Fall als Vierkant (Figur 2a). Der Stempelkopf 21 besitzt darüber hinaus einen Stempelkranzabschnitt 25, wobei der Stempelkranzabschnitt 25 auf seiner Oberseite 26 zwei Auflaufschrägen 25a aufweist, auf die bei Verdrehung von Gehäusedeckel 11 relativ zum Gehäusetopf 12 die Warzen 16 des Gehäusedeckels 11 auflaufen, und so eine Verschiebung des Stempels 20 in Richtung des Stempelsitzes 14 bewirken.

Der Stempelkopf 21 ist konisch ausgebildet. Im Bereich des Stempelkopfes 21 zeigt der Gehäusedeckel 11 einen umlaufenden Bund 18, wobei der Stempelkopf 21 zum Verschließen des Gehäuses an dem umlaufenden Bund 18 anliegt. Wird nun der Hydraulikstecker in Richtung des Pfeiles 4 durch eine entsprechende ruckhafte Bewegung verschoben, dann wird ebenfalls der Stempel 20 in Richtung auf den Stempelsitz 14 entgegen der Kraft der Feder 19 verschoben, bis er auf dem Stempelsitz 14 aufliegt. Hierbei bildet sich ein Schlitz zwischen dem konischen Stempelkopf 21 und dem Bund 18 des Gehäusedeckels 11. Diese Stellung ist in Figur 2 dargestellt, wobei hierbei der Verschlussteller 1a des Hydrauliksteckers 1 in Richtung auf den Hydraulikstecker zu verschoben ist. Hierbei wird die Öffnung des Hydrauliksteckers freigegeben, so dass austretendes Öl durch den Schlitz zwischen Bund 18 und Stempelkopf 21 in den Gehäusetopf einlaufen kann. In diesem Zustand, in dem der Stempel 20 mit seinem Stempelhals auf dem Sitz 14 aufsitzt, wird demzufolge durch den Stempel der Verschlussteller 1a in Richtung auf den Hydraulikstecker 1 zu verschoben. Ein eventuell entstehender Überdruck wird durch den Lüftungskanal 11 a im Gehäusedeckel nach außen abgegeben.

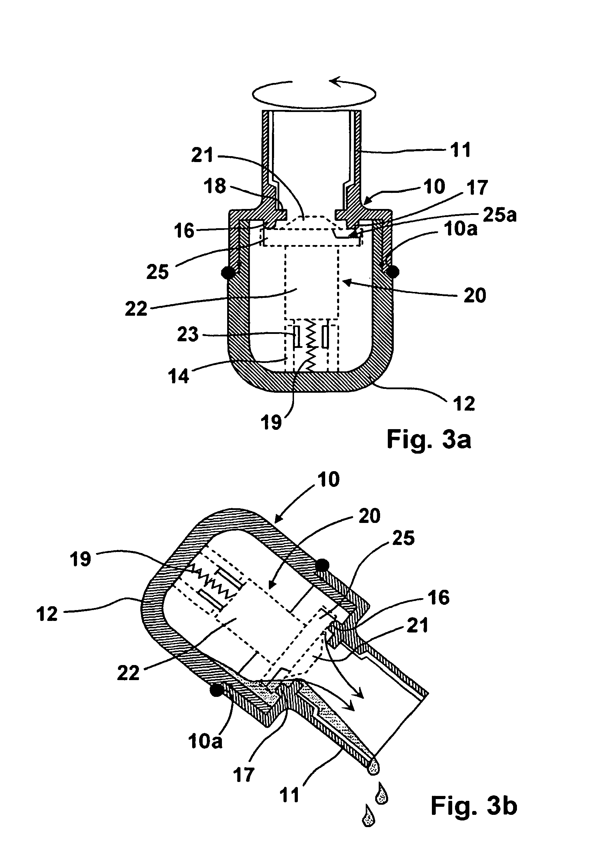

Wird der Stecker aus der Einrichtung entfernt (Fig. 3a, 3b) und wird der Gehäusedeckel relativ zum Gehäusetopf verdreht, mithin durch die Warzen 16, 17 der Kranzabschnitt 25 des im Sitz unverdrehbar gehaltenen Stempels in Richtung des Pfeiles 15 verschoben, entsteht wiederum ein Schlitz zwischen Bund 18 und Stempelkopf 21, wobei durch diesen Schlitz im Gehäusetopf befindliches Öl ausgegossen werden kann, wie sich dies aus Figur 3b erschließt. Die Warzen 16, 17 stehen im ausgerichteten Zustand des Stempels 20 neben dem Kranzabschnitt 25.

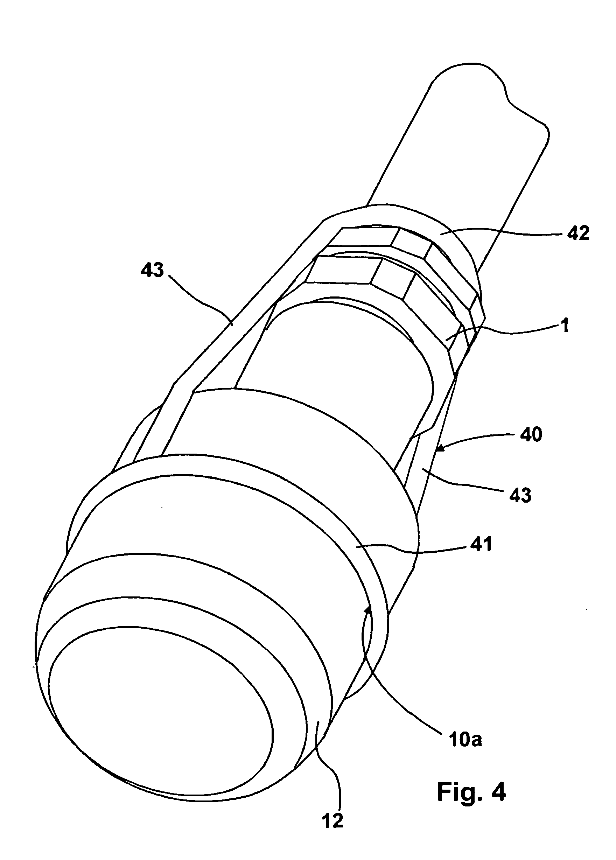

In Bezug auf Figur 4 sind die Verbindungsmittel 40 zum Verbinden des Steckers 1 mit dem Gehäuse 10 erkennbar. Das Verbindungsmittel umfasst zwei Ringe 41, 42, die durch zwei Stege 43 miteinander verbunden sind. Sowohl die Ringe 41, 42 als auch die Stege 43 bestehen bevorzugt aus einem elastisch nachgiebigen Material; zur Fixierung des Ringes 41 auf dem Gehäuse 10 besitzt das Gehäuse 10 eine umlaufende Nut 10a, wobei der Ring 42, wie aus Figur 4 erkennbar, den Stecker endseitig erfasst. Das heißt, durch das Verbindungsmittel wird der Stecker 1 in der Öffnung 13 des Gehäusedeckels gehalten und verhindert somit, ähnlich einer Staubschutzkappe, ein Verschmutzen des Hydrauliksteckers 1.

Bei Verdrehen laufen die Warzen 16, 17 über die Auflaufschrägen 25a auf den Kranzabschnitt 25 auf, und sorgen so für das Einrücken des Stempels in Richtung des Pfeils 15.

## Patentansprüche

1. Einrichtung zur Aufnahme des Hydrauliksteckers (1) einer Hydraulikkupplung, wobei der Hydraulikstecker (1) einen axial verschieblichen Verschlussteller aufweist, wobei die Einrichtung ein Gehäuse (10) umfasst, wobei das Gehäuse eine Öffnung (13) für den Stecker (1) besitzt, und wobei im Gehäuseinneren ein Stempel (20) vorgesehen ist, der von einem im Gehäuse (10) angeordneten Sitz (14) axial verschieblich aufnehmbar ist, wobei der Stempel (20) auf die Gehäuseöffnung (13) zu gerichtet ist, **dadurch gekennzeichnet dass** durch eine entsprechende ruckhafte Bewegung der Steckers gegen den Stempel durch den Stempel (20) der Verschlussteller bei in der Öffnung einsitzendem Stecker verschiebbar ist.

2. Einrichtung nach Anspruch 1,
**dadurch gekennzeichnet,**
**dass** der Stempel (20) einen konisch geformten Stempelkopf (21) aufweist.

3. Einrichtung nach einem oder mehreren der voranstehenden Ansprüche,
**dadurch gekennzeichnet,**
**dass** der Stempel (20) durch den Sitz (14) unverdrehbar aufnehmbar ist.

4. Einrichtung nach einem oder mehreren der voranstehenden Ansprüche,
**dadurch gekennzeichnet,**
**dass** der Stempel (20) unter der Last einer Feder (19) steht.

5. Einrichtung nach einem oder mehreren der voranstehenden Ansprüche,
**dadurch gekennzeichnet,**
**dass** durch den Stempel (20) die Gehäuseöffnung (13) verschließbar ist.

6. Einrichtung nach einem oder mehreren der voranstehenden Ansprüche,
**dadurch gekennzeichnet,**
**dass** das Gehäuse (10) einen Gehäusetopf (12) und einen Gehäusedeckel (11) umfasst, die relativ zueinander verdrehbar miteinander verbunden sind, wobei bei Verdrehung vom Gehäusetopf (12) und Gehäusedeckel (11), durch den Stempel (20) die in dem Gehäusedeckel (11) angeordnete Gehäuseöffnung (13) freigegeben wird.

7. Einrichtung nach einem oder mehreren der voranstehenden Ansprüche,
**dadurch gekennzeichnet,**
**dass** der Stempel (20) einen Kranzabschnitt (25) aufweist, wobei bei Verdrehen des Gehäusedeckels (11) relativ zum Gehäusetopf (12) der Stempel (20) auf den Stempelsitz (14) zu verschoben wird, wobei in der eingeschobenen Stellung des Stempels (20) ein Schlitz zwischen Stempelkopf (21) und Wandung der Gehäuseöffnung freigegeben wird.

8. Einrichtung nach einem oder mehreren der voranstehenden Ansprüche,
**dadurch gekennzeichnet,**
**dass** der Kranzabschnitt (25) auf seiner der Gehäuseöffnung zugewandten Oberseite mindestens eine Auflaufschräge aufweist, wobei der Gehäusedeckel (11) auf seiner dem Kranzabschnitt (25) zugewandten Seite mindestens eine Warze (16, 17) besitzt, die an dem Kranzabschnitt (25) anliegt.

9. Einrichtung nach einem oder mehreren der voranstehenden Ansprüche,
**dadurch gekennzeichnet,**
**dass** der Gehäusedeckel (11) einen Lüftungskanal (11a) aufweist.

10. Einrichtung nach einem oder mehreren der voranstehenden Ansprüche,
**dadurch gekennzeichnet,**
**dass** das Gehäuse (10) Verbindungsmittel zum Verbinden des Gehäuses (10) mit dem Hydraulikstecker (1) aufweist.

11. Einrichtung nach einem oder mehreren der voranstehenden Ansprüche,
**dadurch gekennzeichnet,**
**dass** das Verbindungsmittel zwei Ringe (41, 42) umfasst, die durch mindestens einen Steg (43) miteinander verbunden sind.

12. Einrichtung nach einem oder mehreren der voranstehenden Ansprüche,
**dadurch gekennzeichnet,**
**dass** sowohl die Ringe (41, 42) als auch der Steg (43) aus elastischem Material gefertigt sind.

## Claims

1. A device for receiving the hydraulic plug (1) of a hydraulic coupling, said hydraulic plug (1) comprising an axially slidable closing plate, said device including a housing (10) having an opening (13) for said plug (1) and a rod (20) being provided in the interior of the housing, said rod (20) being receivable by a seat (14) disposed in said housing (10) so as to be axially displaceable and being turned toward the housing opening (13), **characterized in that** a corresponding jerky movement of the plug against the rod causes said closing plate to be displaced by said rod (20) when said plug is seated in said opening.

2. The device as set forth in claim 1,
**characterized in**
**that** the rod (20) comprises a conically shaped rod head (21).

3. The device as set forth in one or several of the afore mentioned claims,
**characterized in**
**that** the rod (20) is non-rotatably receivable by the seat (14).

4. The device as set forth in one or several of the afore mentioned claims,
**characterized in**
**that** the rod (20) is subjected to the load of a spring (19).

5. The device as set forth in one or several of the afore mentioned claims,
**characterized in**
**that** the housing opening (13) is closable by the rod (20).

6. The device as set forth in one or several of the afore mentioned claims,
**characterized in**
**that** the housing (10) comprises a housing body (12) and a housing lid (11) that are relatively rotatably joined together, the rod (20) clearing the housing opening (13) disposed in the housing lid (11) upon rotation of housing body (12) and housing lid (11).

7. The device as set forth in one or several of the afore mentioned claims,
**characterized in**
**that** the rod (20) comprises a crown portion (25), said rod (20) being displaced toward the rod seat (14) upon rotation of the housing lid (11) relative to the housing body (12), a slot between rod head (21) and opening wall of the housing being cleared when the rod (20) is in the inserted position.

8. The device as set forth in one or several of the afore mentioned claims,
**characterized in**
**that** the crown portion (25) has at least one inclined stop surface on its upper side turned toward the housing opening, the housing lid (11) having on its side turned toward the crown portion (25) at least one nipple (16, 17) abutting the crown portion (25).

9. The device as set forth in one or several of the afore mentioned claims,
**characterized in**
**that** the housing lid (11) comprises a venting channel (11 a).

10. The device as set forth in one or several of the afore mentioned claims,
**characterized in**
**that** the housing (10) comprises connecting means for connecting the housing (10) to the hydraulic plug (1).

11. The device as set forth in one or several of the afore mentioned claims,
**characterized in**
**that** the connecting means includes two rings (41, 42) that are joined together by at least one web (43).

12. The device as set forth in one or several of the afore mentioned claims,
**characterized in**
**that** both the rings (41, 42) and the web (43) are made from an elastic material.

## Revendications

1. Mécanisme pour recevoir l'embout hydraulique enfichable (1) d'un raccordement hydraulique, l'embout hydraulique enfichable (1) comportant un plateau de fermeture mobile en coulissement axial, le mécanisme comprenant un boîtier (10) possédant un orifice (13) pour l'embout enfichable (1) et un piston (20) apte à être reçu, mobile en coulissement axial, par un siège (14) disposé dans le boîtier (10) étant prévu à l'intérieur du boîtier, ce piston (20) étant dirigé vers l'orifice (13) dans le boîtier, **caractérisé en ce que** le plateau de fermeture est mobile en coulissement sous l'action du piston (20) lorsque l'embout enfichable est inséré dans l'orifice, son déplacement étant provoqué par un mouvement brusque approprié de l'embout enfichable contre le piston.

2. Mécanisme selon la revendication 1,
**caractérisé en ce**
**que** le piston (20) comporte une tête (21) de piston de forme conique.

3. Mécanisme selon une ou plusieurs des revendications précédentes,
**caractérisé en ce**
**que** le piston (20) est apte à être reçu, immobile en rotation, par le siège (14).

4. Mécanisme selon une ou plusieurs des revendications précédentes,
**caractérisé en ce**
**que** le piston (20) est soumis à l'action d'un ressort (19).

5. Mécanisme selon une ou plusieurs des revendications précédentes,
**caractérisé en ce**
**que** l'orifice (13) dans le boîtier est apte à être fermé par le piston (20).

6. Mécanisme selon une ou plusieurs des revendications précédentes,
**caractérisé en ce**
**que** le boîtier (10) comprend un corps (12) de boîtier et un couvercle (11) de boîtier qui sont reliés ensemble, mobiles en rotation l'un par rapport à l'autre, le piston (20) libérant l'orifice (13) pratiqué dans le couvercle (11) du boîtier lorsque le corps(12) du boîtier et le couvercle (11) du boîtier effectuent un mouvement de rotation l'un par rapport à l'autre.

7. Mécanisme selon une ou plusieurs des revendications précédentes,
**caractérisé en ce**
**que** le piston (20) comporte une partie en forme de couronne (25), le piston (20) étant déplacé en direction du siège (14) du piston lors de la rotation du couvercle (11) du boîtier par rapport au corps (12) du boîtier, une fente entre la tête (21) du piston et la paroi de l'orifice dans le boîtier étant libérée dans la position insérée du piston (20).

8. Mécanisme selon une ou plusieurs des revendications précédentes,
**caractérisé en ce**
**que**, sur sa face supérieure tournée vers l'orifice du boîtier, la partie en forme de couronne (25) comporte au moins une surface de butée inclinée, le couvercle (11) du boîtier possédant sur sa face tournée vers la partie en forme de couronne (25) au moins un mamelon (16, 17) en appui contre la partie en forme de couronne (25).

9. Mécanisme selon une ou plusieurs des revendications précédentes,
**caractérisé en ce**
**que** le couvercle (11) du boîtier comporte un canal de ventilation (11a).

10. Mécanisme selon une ou plusieurs des revendications précédentes,
**caractérisé en ce**
**que** le boîtier (10) comporte des moyens de liaison pour relier le boîtier (10) à l'embout hydraulique enfichable (1).

11. Mécanisme selon une ou plusieurs des revendications précédentes,
**caractérisé en ce**
**que** le moyen de liaison comprend deux anneaux (41, 42) qui sont reliés ensemble par au moins un méplat (43).

12. Mécanisme selon une ou plusieurs des revendications précédentes,
**caractérisé en ce**
**que** les anneaux (41, 42) comme le méplat (43) sont réalisés en un matériau élastique.
